# FASCICULE DE BREVET EUROPEEN

(11) **EP 1 973 778 B1**
(45) Date de publication et mention de la délivrance du brevet: **14.10.2015**
(21) Numéro de dépôt: 07717980.2
(22) Date de dépôt: 18.01.2007
(51) Int. Cl.: B64D 13/08, F02K 3/06, F02K 3/075, F02K 3/115, F02C 7/141

(54) **TURBOMOTEUR À DOUBLE FLUX POURVU D'UN PRÉREFROIDISSEUR**
MIT EINEM VORKÜHLER AUSGESTATTETER DOPPELSTROMTURBINENMOTOR
DUAL FLOW TURBINE ENGINE EQUIPPED WITH A PRECOOLER

(30) Priorité: 19.01.2006 FR 0600472
(43) Date de publication de la demande: 01.10.2008
(73) Titulaire: AIRBUS OPERATIONS (SAS), 31060 Toulouse (FR)
(72) Inventeur: PORTE, Alain, F-31770 Colomiers (FR); PRAT, Damien, F-31770 Colomiers (FR)
(74) Mandataire: Bonnetat, Christian
(86) Numéro de dépôt international: PCT/FR2007/000090
(87) Numéro de publication internationale: WO 2007/083026

(56) Documents cités:
- EP-A1- 0 743 435
- DE-A1- 2 411 950
- GB-A- 2 272 025
- GB-A- 2 277 781
- US-A- 4 493 184

## Description

La présente invention concerne un turbomoteur à double flux pourvu d'un prérefroidisseur.

On sait que, à bord d'un aéronef, il est nécessaire d'avoir à disposition de l'air chaud afin de pouvoir réaliser certaines fonctions, telles que le conditionnement d'air de la cabine de pilotage et de la cabine des passagers ou le dégivrage de certains organes de l'aéronef.

On sait de plus que cet air chaud provient des turbomoteurs de l'aéronef et doit subir un refroidissement important avant utilisation. Pour ce faire, on prévoit un échangeur de chaleur, généralement appelé prére-froidisseur (precooler en anglais aéronautique), dans lequel de l'air chaud prélevé sur le générateur central du turboréacteur est refroidi par de l'air froid prélevé dans le canal de soufflante, c'est-à-dire sur le flux froid du turbomoteur, ce qui perturbe le bon fonctionnement de ce dernier. De plus, ledit prérefroisisseur est généralement logé dans ledit canal de soufflante, ce qui ajoute des perturbations aérodynamiques aux perturbations dues au prélèvement sur le flux froid.

Par ailleurs, l'air froid prélevé sur le flux froid du turbomoteur et servant à refroidir l'air chaud prélevé sur le générateur central donne naissance à un courant d'air froid réchauffé, qui doit être rejeté à l'extérieur, du turbomoteur, ce qui augmente la traînée de l'aéronef. Un échangeur de chaleur pour un turbomoteur à double flux selon l'art antérieur est connu dans le document GB2272025.

La présente invention a pour objet de remédier à ces inconvénients de la technique antérieure.

A cette fin, selon l'invention, le turbomoteur à double flux pour aéronef, comportant :
- une nacelle creuse à axe longitudinal pourvue, à l'avant, d'une entrée d'air et, à l'arrière, d'une sortie d'air ;
- un générateur de flux chaud central, disposé axialement dans ladite na-celle ;
- une soufflante disposée axialement dans ladite nacelle, en avant dudit générateur central, et apte à engendrer le flux froid pour ledit turbomoteur ;
- un carénage externe porté intérieurement par ladite nacelle et un carénage interne entourant ledit générateur central, lesdits carénages externe et interne délimitant entre eux un canal de soufflante à section annulaire pour ledit flux froid ; et
- un prérefroidisseur comportant une entrée pour un courant d'air chaud prélevé sur ledit générateur central et une sortie pour un courant d'air chaud refroidi à l'aide dudit flux froid,
est remarquable en ce que ledit prérefroidisseur est disposé à l'intérieur d'au moins une portion de ladite partie arrière du carénage interne, autour dudit axe longitudinal, et en contact thermique avec ladite partie arrière du carénage interne, de façon à être refroidi par ledit flux froid qui souffle ladite partie arrière du carénage interne.

Ainsi, grâce à la présente invention, on évite les perturbations aérodynamiques dans le canal de soufflante dues au prérefroidisseur, puisque celui-ci est maintenant logé dans la partie arrière dudit carénage interne. De plus, on évite les inconvénients dus au prélèvement sur le flux froid et au rejet d'air froid réchauffé, puisque ledit prérefroidisseur peut utiliser directement, sans prélèvement ni rejet, le flux froid qui sort du canal de soufflante et qui souffle ladite partie arrière du carénage interne.

On résout ainsi les problèmes de la technique antérieure.

De préférence, afin d'obtenir une surface d'échange thermique satisfaisante entre l'air chaud circulant dans ledit prérefroidisseur et le flux froid soufflant celui-ci, on prévoit que ledit prérefroidisseur présente une forme à section annulaire et s'étend sur toute la périphérie interne de ladite partie arrière du carénage interne.

On sait que, dans certains turbomoteurs, ledit carénage interne et ledit générateur central délimitent entre eux une chambre intermédiaire à section annulaire entourant ledit générateur central, ladite chambre intermédiaire étant utilisée pour la circulation d'un courant d'air froid apte à réguler la température dudit générateur central. Dans ce cas, la mise en oeuvre de la présente invention est particulièrement avantageuse, ledit prérefroidisseur étant alors disposé du côté de ladite chambre intermédiaire.

Dans une forme de réalisation préférée de la présente invention, ledit carénage interne est, au moins dans sa partie arrière, à double paroi, c'est-à-dire qu'il comporte une paroi interne et une paroi externe séparées l'une de l'autre par un espace en forme de lame annulaire, et ledit prére-froidisseur est agencé dans ledit espace.

A cet effet, ledit prérefroidisseur peut comporter :
- une manche de distribution, reliée à ladite entrée du courant d'air chaud et apte à distribuer ledit air chaud sur au moins approximativement la totalité de la longueur (parallèlement à l'axe longitudinal de la nacelle) dudit espace annulaire ; et
- une manche de collecte, reliée à ladite sortie du courant d'air chaud refroidi et apte à collecter ledit air chaud refroidi sur au moins approximativement la totalité de la longueur dudit espace annulaire.

De préférence, entre ladite manche de distribution et ladite manche de collecte (qui sont disposées à la périphérie interne de la partie arrière du carénage interne de façon optimale pour le refroidissement de l'air chaud), ledit prérefroidisseur comporte une pluralité de canaux courbes pour le guidage de l'air chaud, lesdits canaux étant transversaux à l'axe longitudinal de la nacelle et répartis sur la longueur dudit espace annulaire.

De tels canaux peuvent être avantageusement formés par une armature de renfort du carénage interne, solidaire desdites parois interne et externe de ce dernier.

Avantageusement, afin de permettre une régulation encore plus fine et plus aisée de la température de l'air chaud refroidi, on prévoit une conduite, de préférence pourvue d'une vanne commandable, montée en parallèle sur ledit prérefroidisseur et reliant son entrée d'air chaud et sa sortie d'air chaud refroidi.
Les figures du dessin annexé feront bien comprendre comment l'invention peut être réalisée. Sur ces figures, des références identiques désignent des éléments semblables.
La figure 1 illustre, en coupe axiale schématique, un turbomoteur à double flux connu.
Les figures 2 et 3 illustrent, en vues semblables à la figure 1, deux variantes de réalisation du turbomoteur conforme à la présente invention.
La figure 4 illustre, en demi-coupe longitudinale schématique, le carénage interne entourant le flux chaud des moteurs des figures 2 et 3.
Les figures 5 et 6 illustrent, à plus grande échelle, la structure du carénage de la figure 4.
La figure 7 est une vue extérieure en perspective de l'arrière dudit carénage interne.
La figure 8 est une vue extérieure de l'avant dudit carénage interne.
Les figures 9 et 10 sont des coupes transversales partielles, respectivement selon les lignes IX-IX et X-X de la figure 7.

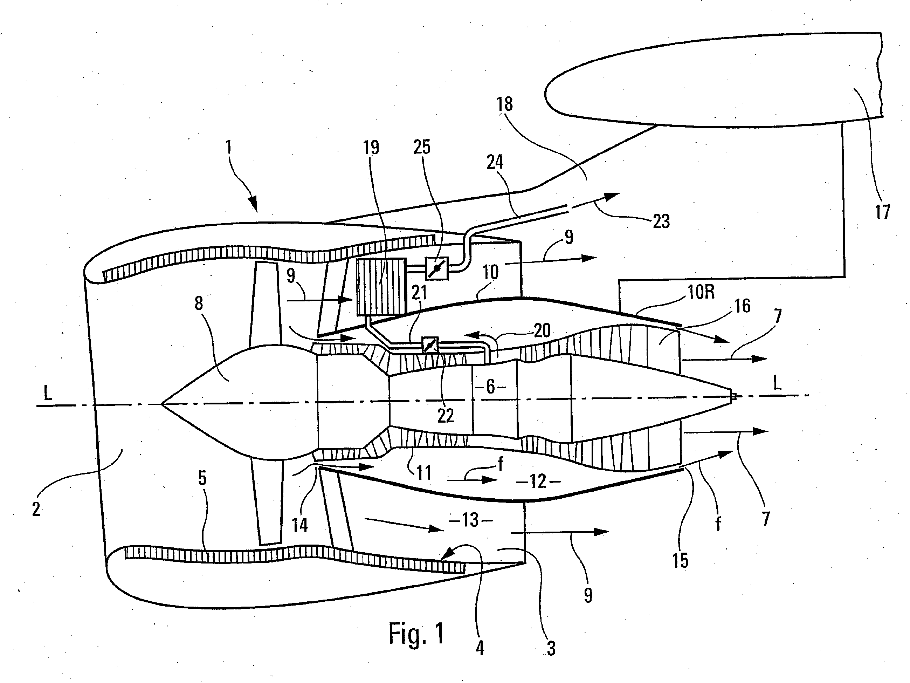

Le turbomoteur à double flux, montré par chacune des figures 1, 2 et 3, comporte une nacelle creuse 1 d'axe longitudinal L-L pourvue, à l'avant, d'une entrée d'air 2 et, à l'arrière, d'une sortie d'air 3. Ladite nacelle creuse 1 porte intérieurement un carénage 4, de préférence revêtu au moins en partie de revêtements d'atténuation acoustique 5, destinés à atténuer les bruits internes dudit turbomoteur.

A l'intérieur de la nacelle creuse 1, sont disposés :
- un générateur de flux chaud central 6, comprenant de façon connue des compresseurs à basse et haute pression, une chambre de combustion et des turbines à basse et haute pression, et engendrant le flux chaud axial 7 dudit turbomoteur ;
- une soufflante 8 disposée axialement en avant dudit générateur central 6 et engendrant le flux froid 9 annulaire dudit turbomoteur ; et
- un carénage interne 10 entourant ledit générateur central 6 en ménageant avec le carter 11 de celui-ci une chambre intermédiaire 1 2 à section annulaire entourant ledit générateur, la partie arrière 10R dudit carénage formant la paroi externe de la tuyère 16 dudit flux chaud 7.

Le carénage interne 10 et le carénage 4, qui lui est externe, forment entre eux un canal de soufflante 13 à section annulaire entourant le générateur central 6 et à travers lequel s'écoule le flux froid 9.

Entre le carénage interne 10 et le générateur central 6 sont formées, à l'avant, une fente annulaire d'admission d'air 14 et, à l'arrière, une fente annulaire d'évacuation d'air 15. Ainsi, la chambre intermédiaire 12 peut être parcourue par un courant d'air froid f, prélevé sur le flux froid 9 au niveau de la fente avant 14 et rejeté à la frontière entre ledit flux chaud 7 et ledit flux froid 9, au niveau de la fente arrière 15, ce courant d'air froid f permettant de réguler le générateur central 6 en température.

Par ailleurs, de façon usuelle, la nacelle 1 est supportée par une aile 17 de l'aéronef (partiellement représentée) par l'intermédiaire d'un mât de suspension 18.

Dans le turbomoteur connu, illustré sur la figure 1, on prévoit un prérefroidisseur 19, disposé dans la partie supérieure du canal de soufflante 13 dans le flux froid 9. Ce prérefroidisseur 19 est alimenté par un courant d'air chaud 20, à partir du générateur central 6, par l'intermédiaire d'une conduite 21 sur laquelle est prévue une vanne de régulation d'air chaud 22. L'air chaud refroidi 23 engendré par le prérefroidisseur 19 est adressé aux équipements utilisateurs (non représentés) par une conduite 24 qui passe dans le mât de suspension 18 et qui peut être pourvue d'une vanne de régulation 25.

Ainsi, dans cette disposition connue, une partie du flux froid est prélevée par le prérefroidisseur 19 pour refroidir le courant d'air chaud 20 et engendrer le courant d'air chaud refroidi 23 et il en résulte de plus la formation, par ledit prérefroidisseur, d'un courant d'air froid réchauffé (non représenté) correspondant à ladite partie du flux froid prélevée. Ce courant d'air froid réchauffé est rejeté à l'extérieur, de toute manière connue non représentée sur la figure 1, et est généralement la cause d'une augmentation de traînée.

On comprend donc aisément que la présence du prérefroidisseur 19 dans le canal de soufflante 13, le prélèvement d'une partie du flux froid 9 et le rejet d'air froid réchauffé sont préjudiciables aux performances du moteur connu illustré par la figure 1.

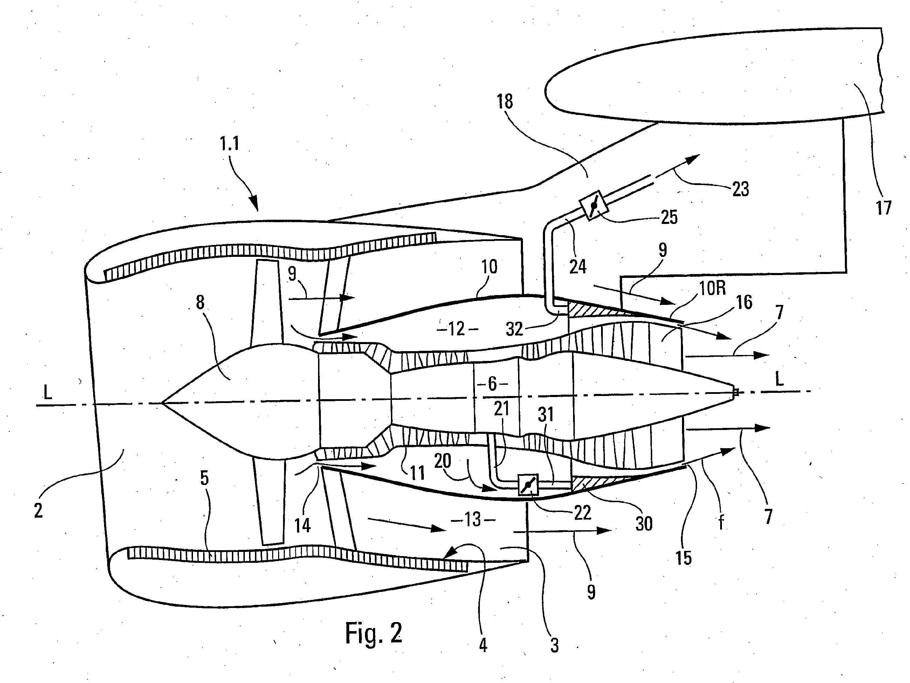

Dans la nacelle 1.1, conforme à la présente invention et représentée sur la figure 2, on retrouve la totalité des éléments 2 à 18 et 20 à 25 décrits en regard de la figure 1. Dans cette nacelle 1.1, le prérefroidisseur 19 a été supprimé et remplacé par le prérefroidisseur 30, comportant une entrée 31, reliée à la conduite 21 d'amenée du courant d'air chaud 20, et une sortie 32, reliée à la conduite 24 véhiculant l'air chaud refroidi 23.

Le prérefroidisseur 30 présente une forme à section annulaire et est disposé à l'intérieur de ladite partie arrière 10R du carénage interne 10, du côté de la chambre intermédiaire 12, et s'étend sur toute la périphérie interne de ladite partie arrière. Il est coaxial à l'axe L-L et il est en contact thermique avec ladite partie arrière 10R. Puisque celle-ci est au contact du flux froid 9 sortant du canal de soufflante 13, ledit prérefroidisseur 30 est lui-même refroidi par le flux froid 9, sans pour autant en prélever une partie ni avoir à rejeter de l'air chaud refroidi.

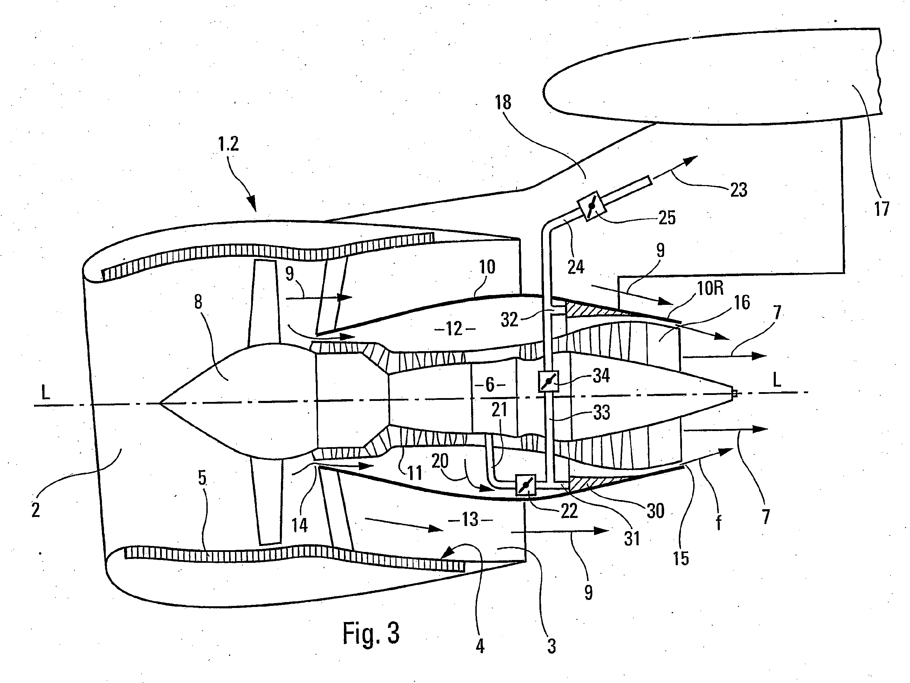

Sur la figure 3, qui montre tous les éléments de la figure 2, on a de plus prévu, dans la nacelle 1.2 conforme à l'invention, une conduite de dérivation 33, montée en parallèle sur le prérefroidisseur 30 en reliant l'éntrée 31 et la sortie 32 et pourvue d'une vanne 34. De cette façon, éventuellement, on peut faire passer de l'air chaud directement de l'entrée 31 à la sortie 32 en court-circuitant le prérefroidisseur 30.

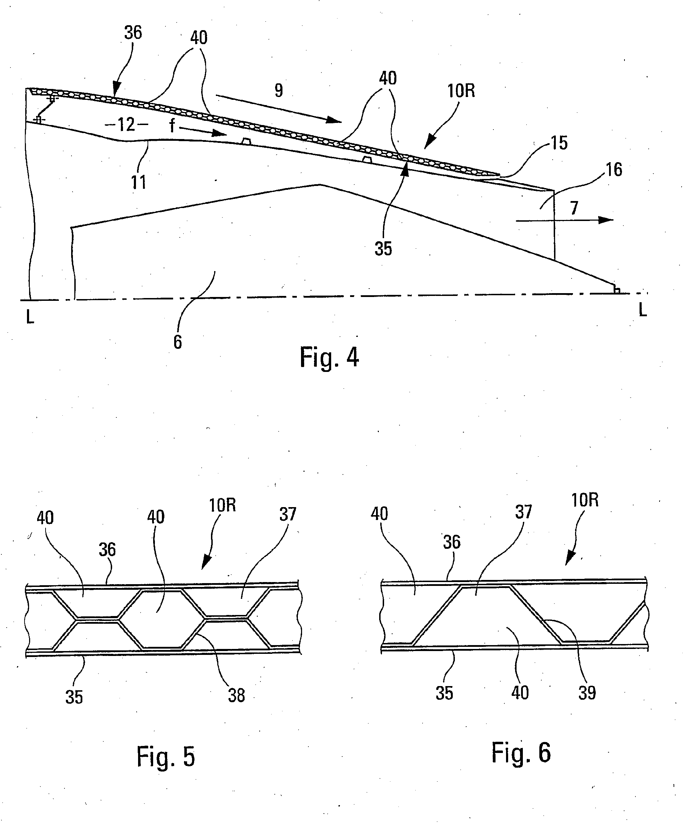

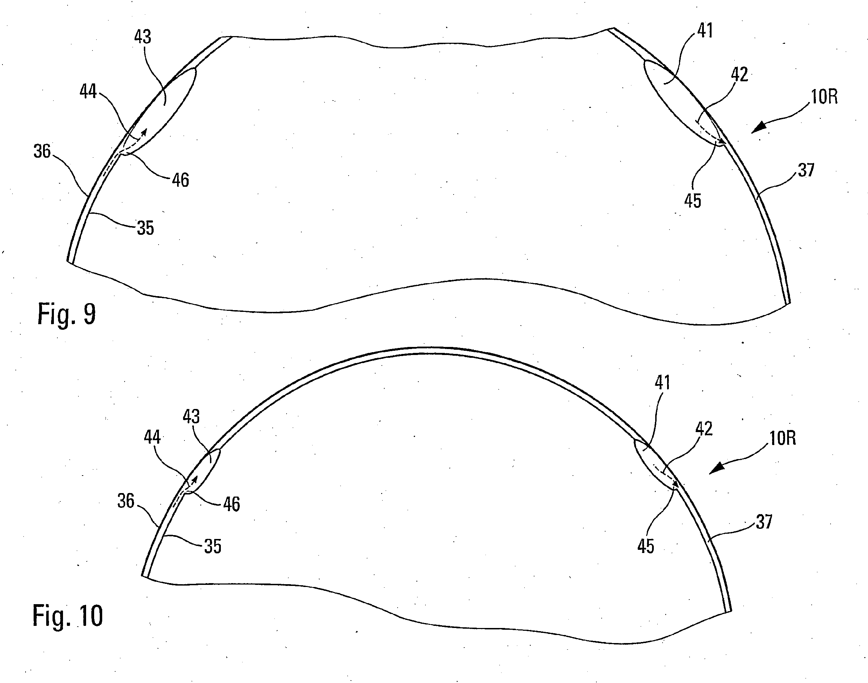

L'exemple de réalisation du prérefroidisseur 30, illustré par les figures 4 à 10, est structurellement incorporé à ladite partie arrière 10R du carénage interne 10.

Comme on peut le voir sur les figures 4 à 6, ladite partie arrière 10R comporte une paroi interne 35 et une paroi externe 36, parallèles et écartées l'une de l'autre d'un espace 37 en forme de lame annulaire. Dans cet espace est disposée une armature 38 (figure 5) ou 39 (figure 6), solidaire desdites parois interne et externe 35 et 36 et délimitant des canaux courbes 40 subdivisant l'espace 37. Les canaux 40 sont transversaux à l'axe L-L de la nacelle et sont répartis le long de ladite partie arrière 10R.

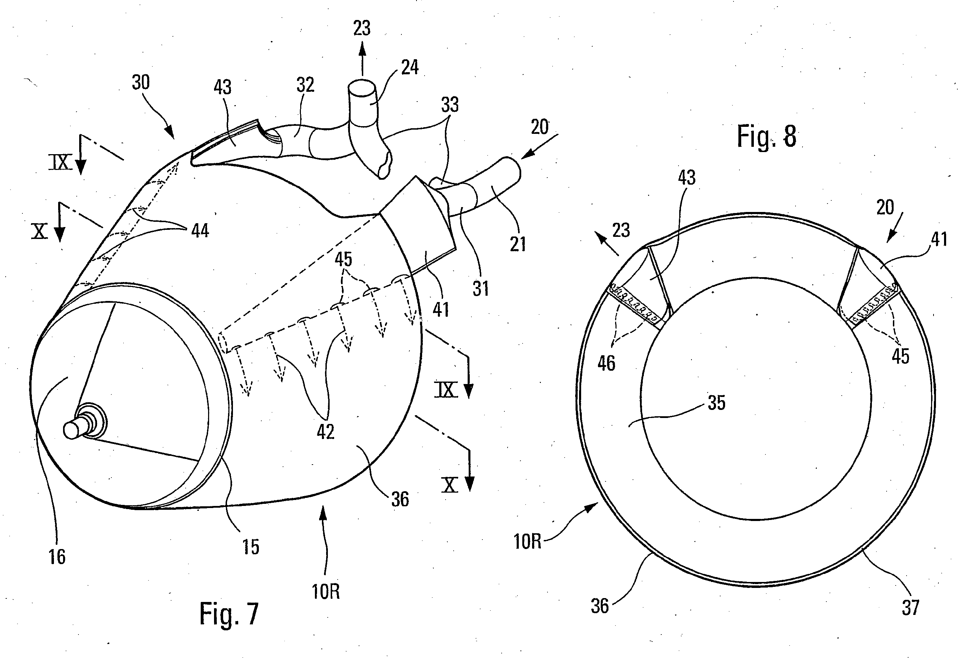

Par ailleurs, ledit prérefroidisseur 30 comporte (voir la figure 7) :
- une manche de distribution 41, reliée à l'entrée d'air chaud 31 et apte à distribuer ledit air chaud (voir les flèches 42) à l'intérieur dudit espace 37 (et donc dans les canaux 40) tout le long de ladite partie arrière 10R et transversalement à celle-ci ; et
- une manche de collecte 43, reliée à la sortie d'air chaud refroidi 32 et apte à collecter ledit air (voir les flèches 44) traversant ledit espace 37 à travers les canaux 40, tout le long de ladite partie arrière 10R.

Comme illustré sur les figures 7 à 10, la section des manches 41 et 43 diminue de l'avant vers l'arrière, alors que c'est le contraire pour les orifices de distribution 45 et les orifices de collecte 46 dont elles sont respectivement pourvues.

## Revendications

1. Turbomoteur à double flux pour aéronef, ledit turbomoteur comportant :
- une nacelle creuse (1) à axe longitudinal (L-L) pourvue, à l'avant, d'une entrée d'air (2) et, à l'arrière, d'une sortie d'air (3) ;
- un générateur central (6) de flux chaud, disposé axialement dans ladite nacelle (1) ;
- une soufflante (8) disposée axialement dans ladite nacelle (1), en avant dudit générateur central (6), et apte à engendrer le flux froid (9) pour ledit turbomoteur ;
- un carénage externe (4) porté intérieurement par ladite.nacelle (1) et un carénage interne (10) entourant ledit générateur central (6), lesdits carénages externe et interne délimitant entre eux un canal de soufflante (13) à section annulaire pour ledit flux froid (9) ; et
- un prérefroidisseur comportant une entrée pour un courant d'air chaud (20) prélevé sur ledit générateur central (6) et une sortie pour un courant d'air chaud refroidi à l'aide dudit flux froid (9),
**caractérisé en ce que** ledit prérefroidisseur (30) est disposé à l'intérieur d'au moins une portion de ladite partie arrière (10R) du carénage interne (10), autour dudit axe longitudinal (L-L), et en contact thermique avec ladite partie arrière (10R) du carénage interne (10), de façon à être refroidi par ledit flux froid (9) qui souffle ladite partie arrière (10R) du carénage interne (10).

2. Turbomoteur selon la revendication 1,
**caractérisé en ce que** ledit prérefroidisseur (30) présente une forme à section annulaire et s'étend sur toute la périphérie de ladite partie arrière (10R) du carénage interne (10).

3. Turbomoteur selon l'une des revendications 1 ou 2, dans lequel ledit carénage interne (10) délimite avec ledit générateur central (6) une chambre intermédiaire (12) à section annulaire entourant ledit générateur central,
**caractérisé en ce que** ledit prérefroidisseur (30) se trouve du côté de ladite chambre intermédiaire (12).

4. Turbomoteur selon l'une des revendications 1 à 3,
**caractérisé en ce que**, au moins dans sa partie arrière (10R), ledit carénage interne (10) comporte une paroi interne (35) et une paroi externe (36), parallèles, séparées l'une de l'autre par un espace (37) en forme de lame annulaire et **en ce que** ledit refroidisseur (30) est agencé dans ledit espace (37).

5. Turbomoteur selon la revendication 4,
**caractérisé en ce qu'**il comporte :
- une manche de distribution (41), reliée à ladite entrée (31) du courant d'air chaud (20) et apte à distribuer ledit air chaud sur au moins approximativement la totalité de la longueur dudit espace annulaire (37) ; et
- une manche de collecte (43), reliée à ladite sortie (32) du courant d'air chaud refroidi (23) et apte à collecter ledit air chaud refroidi sur au moins approximativement la totalité de la longueur dudit espace annulaire (37).

6. Turbomoteur selon la revendication 5,
**caractérisé en ce que**, entre ladite manche de distribution (41) et ladite manche de collecte (43), ledit prérefroidisseur (30) comporte une pluralité de canaux courbes (40) pour le guidage de l'air chaud, lesdits canaux étant transversaux à l'axe longitudinal (L-L) de la nacelle et répartis sur la longueur dudit espace annulaire (37).

7. Turbomoteur selon la revendication 6,
**caractérisé en ce que** lesdits canaux (40) sont formés par une armature (38, 39) renforçant ladite partie arrière (10R) du carénage interne (10) et solidaire desdites parois interne (35) et externe (36).

8. Turbomoteur selon l'une des revendications 1 à 7,
**caractérisé en ce qu'**il comporte une conduite de dérivation (33) montée en parallèle sur ledit prérefroidisseur (30) en reliant ladite entrée (31) du courant de flux chaud (20) et ladite sortie (32) du courant de flux chaud refroidi (23).

9. Turbomoteur selon la revendication 8,
**caractérisé en ce que** ladite conduite de dérivation (33) est pourvue d'une vanne commandable (34).

## Patentansprüche

1. Zweikreistriebwerk für ein Luftfahrzeug, wobei das Triebwerk umfasst:
- eine hohle Gondel (1) mit einer Längsachse (L-L), die vorn mit einem Lufteinlass (2) und hinten mit einem Luftauslass (3) versehen ist;
- einen zentralen, axial in der Gondel (1) angeordneten Generator (6) eines heißen Stroms;
- ein in der Gondel (1) vor dem zentralen Generator (6) angeordnetes Gebläse (8), das geeignet ist, den kalten Strom (9) für das Triebwerk zu erzeugen;
- eine Außenverkleidung (4), die innen fest an der Gondel (1) angebracht ist, und eine Innenverkleidung (10), die den zentralen Generator (6) umgibt, wobei die Außen- und die Innenverkleidung zwischen sich einen Gebläsekanal (13) mit ringförmigem Querschnitt für den kalten Strom (9) begrenzen; und
- einen Vorkühler, der einen Eingang für einen aus dem zentralen Generator (6) entnommenen Heißluftstrom (20) und einen Ausgang für einen mithilfe des kalten Stroms (9) gekühlten Heißluftstrom aufweist,
**dadurch gekennzeichnet, dass** der Vorkühler (30) im Inneren wenigstens eines Abschnitts des hinteren Teils (10R) der Innenverkleidung (10), um die Längsachse (L-L) herum und in thermischem Kontakt mit dem hinteren Teil (10R) der Innenverkleidung (10) angeordnet ist, um durch den kalten Strom (9) gekühlt zu werden, der den hinteren Teil (10R) der Innenverkleidung (10) anströmt.

2. Triebwerk nach Anspruch 1,
**dadurch gekennzeichnet, dass** der Vorkühler (30) eine Form mit ringförmigem Querschnitt aufweist und sich um den gesamten Umfang des hinteren Teils (10R) der Innenverkleidung (10) erstreckt.

3. Triebwerk nach einem der Ansprüche 1 oder 2, wobei die Innenverkleidung (10) mit dem zentralen Generator (6) eine Zwischenkammer (12) mit ringförmigem Querschnitt begrenzt, die den zentralen Generator umgibt,
**dadurch gekennzeichnet, dass** sich der Vorkühler (30) auf der Seite der Zwischenkammer (12) befindet.

4. Triebwerk nach einem der Ansprüche 1 bis 3,
**dadurch gekennzeichnet, dass** die Innenverkleidung (10) wenigstens in ihrem hinteren Teil (10R) eine Innenwand (35) und eine Außenwand (36) aufweist, die parallel sind und durch einen Raum (37) von der Form einer ringförmigen Lamelle getrennt sind, und dadurch, dass der Vorkühler (30) in dem Raum (37) angeordnet ist.

5. Triebwerk nach Anspruch 4,
**dadurch gekennzeichnet, dass** es aufweist:
- einen Verteilungsschlauch (41), der mit dem Eingang (31) des Heißluftstroms (20) verbunden ist und geeignet ist, die Heißluft auf wenigstens annähernd die gesamte Länge des ringförmigen Raumes (37) zu verteilen; und
- einen Sammelschlauch (43), der mit dem Ausgang (32) des gekühlten Heißluftstroms (23) verbunden ist und geeignet ist, die gekühlte Heißluft auf wenigstens annähernd der gesamten Länge des ringförmigen Raumes (37) zu sammeln.

6. Triebwerk nach Anspruch 5,
**dadurch gekennzeichnet, dass** zwischen dem Verteilungsschlauch (41) und dem Sammelschlauch (43) der Vorkühler (30) mehrere gekrümmte Kanäle (40) zur Führung der Heißluft aufweist, wobei die Kanäle quer zur Längsachse (L-L) der Gondel verlaufen und über die Länge des ringförmigen Raumes (37) verteilt sind.

7. Triebwerk nach Anspruch 6,
**dadurch gekennzeichnet, dass** die Kanäle (40) von einer Bewehrung (38, 39) gebildet werden, die den hinteren Teil (10R) der Innenverkleidung (10) verstärkt und fest mit der Innenwand (35) und der Außenwand (36) verbunden ist.

8. Triebwerk nach einem der Ansprüche 1 bis 7,
**dadurch gekennzeichnet, dass** es eine Umgehungsleitung (33) aufweist, die parallel zu dem Vorkühler (30) angebracht ist, wobei sie den Eingang (31) des Heißluftstroms (20) und den Ausgang (32) des gekühlten Heißluftstroms (23) verbindet.

9. Triebwerk nach Anspruch 8,
**dadurch gekennzeichnet, dass** die Umgehungsleitung (33) mit einem steuerbaren Ventil (34) versehen ist.

## Claims

1. A bypass turbine engine for an aircraft, said turbine engine comprising:
- a hollow nacelle (1) of longitudinal axis (L-L) provided, at the front, with an air inlet (2) and, at the rear, with an air outlet (3);
- a central hot-stream generator (6), positioned axially in said nacelle (1);
- a fan (8) positioned axially in said nacelle (1) forward of said central generator (6) and able to generate the cold stream (9) for said turbine engine;
- an outer fairing (4) borne internally by said nacelle (1) and an inner fairing (10) surrounding said central generator (6), said outer and inner fairings between them delimiting a fan duct (13) of annular cross section for said cold stream (9); and
- a precooler comprising an inlet for a current of hot air (20) bled from said central generator (6) and an outlet for a current of hot air cooled using said cold stream (9),
**characterized in that** said precooler (30) is positioned inside at least a portion of said rear part (10R) of the inner fairing (10) around said longitudinal axis (L-L) and in thermal contact with said rear part (10R) of the inner fairing (10) so as to be cooled by said cold stream (9) blown onto said rear part (10R) of the inner fairing (10).

2. The turbine engine as claimed in claim 1, **characterized in that** said precooler (30) has a shape of annular cross section and extends over the entire periphery of said rear part (10R) of the inner fairing (10).

3. The turbine engine as claimed in one of claims 1 and 2, in which said inner fairing (10) delimits with said central generator (6) an intermediate chamber (12) of annular cross section surrounding said central generator, **characterized in that** said precooler (30) lies on the same side as said intermediate chamber (12).

4. The turbine engine as claimed in one of claims 1 to 3, **characterized in that**, at least in its rear part (10R), said inner fairing (10) comprises an inner wall (35) and an outer wall (36) which are parallel and separated from one another by a space (37) in the form of an annular gap, and **in that** said cooler (30) is positioned in said space (37).

5. The turbine engine as claimed in claim 4, **characterized in that** it comprises:
- a distribution pipe (41), connected to said inlet (31) for the current of hot air (20) and able to distribute said hot air to at least approximately the entire length of said annular space (37); and
- a collection pipe (43) connected to said outlet (32) for the current of cooled hot air (23) and able to collect said cooled hot air over at least approximately the entire length of said annular space (37).

6. The turbine engine as claimed in claim 5, **characterized in that**, between said distribution pipe (41) and said collection pipe (43), said precooler (30) comprises a plurality of curved ducts (40) for guiding the hot air, said ducts being transverse to the longitudinal axis (L-L) of the nacelle and distributed over the length of said annular space (37).

7. The turbine engine as claimed in claim 6, **characterized in that** said ducts (40) are formed by a framework (38, 39) reinforcing said rear part (10R) of the inner fairing (10) and secured to said inner (35) and outer (36) walls.

8. The turbine engine as claimed in one of claims 1 to 7, **characterized in that** it comprises a bypass duct (33) mounted in parallel with said precooler (30) and connecting said inlet (31) for the current of hot stream (20) and said outlet (32) for the current of cooled hot stream (23).

9. The turbine engine as claimed in claim 8, **characterized in that** said bypass duct (33) is equipped with a controllable valve (34).
